# EUROPÄISCHE PATENTSCHRIFT

(11) **EP 0 722 375 B1**
(45) Veröffentlichungstag und Bekanntmachung des Hinweises auf die Patenterteilung: **10.12.1997**
(21) Anmeldenummer: 94927511.9
(22) Anmeldetag: 30.08.1994
(51) Int. Cl.: B23C 3/06

(54) **BEARBEITUNGSZENTRUM FÜR KURBELWELLEN**
CRANKSHAFT MACHINING CENTRE
CENTRE D'USINAGE DE VILEBREQUINS

(30) Priorität: 02.09.1993 DE 4329610
(43) Veröffentlichungstag der Anmeldung: 24.07.1996
(73) Patentinhaber: Dörries Scharmann AG, D-41236 Mönchengladbach (DE)
(72) Erfinder: KRENGEL, Bernd, D-31275 Lehrte (DE); GILSTER, Helmut, D-30966 Hemmingen (DE); SCHNEIDER, Alfred, D-31683 Obernkirchen (DE); SCHWEEN, Axel, D-30853 Langenhagen (DE)
(74) Vertreter: Rehders, Jochen, Dipl.-Ing.
(86) Internationale Anmeldenummer: EP9402864
(87) Internationale Veröffentlichungsnummer: WO9506535

(56) Entgegenhaltungen:
- DE-A- 2 352 539
- FR-A- 1 600 140
- FR-A- 2 006 722
- US-A- 2 285 772

## Beschreibung

Die Erfindung betrifft ein Bearbeitungszentrum für Kurbelwellen mit einem Maschinenbett, einer angetriebenen, an einem Ende des Maschinenbetts angeordneten ersten Planscheibe zum Einspannen eines Kurbelwellenendes, einer zweiten, angetriebenen, am anderen Ende des Maschinenbetts angeordneten und darauf verfahrbaren Planscheibe zum Einspannen des anderen Kurbelwellenendes, wenigstens einem auf dem Maschinenbett verfahrbaren Setzstock zum Unterstützen der Kurbelwelle an wenigstens einem Lager- oder Hubzapfen und wenigstens einer auf dem Maschinenbett verfahrbaren, mit ihrem Bearbeitungskopf wenigstens in X-, Y- und Z-Richtung verfahrbaren Universalfräseinheit, das aus der FR-A 1 600 140 bekannt ist.

Für das Bearbeiten von Kurbelwellen lassen sich Dreh- und Fräsmaschinen einsetzen. Zunächst werden in der Regel die Endbereiche und Lagerzapfen der Kurbelwelle bearbeitet. Hierzu wird die Kurbelwelle an den Enden an Planscheiben in der Achse der Lagerzapfen eingespannt und an den inneren Lagerzapfen durch Setzstöcke unterstützt. Bei einer Bearbeitung durch Drehen ist die Drehzahl verhältnismäßig hoch, da das Bearbeitungswerkzeug stillsteht. Bei der Bearbeitung durch Fräsen kann die Drehzahl der Kurbelwelle niedrig sein, da sich der Messerkopf mit höherer Drehzahl dreht.

Beim Bearbeiten der Kurbelwangen und Hubzapfen sind zwei Verfahrensweisen möglich. Bei der einen wird die Kurbelwelle entsprechend dem Hub der Hubzapfen außermittig aufgespannt, so daß sie sich um die Achse des jeweils zu bearbeitenden Hubzapfens dreht. Wird dieser Bearbeitungsgang durch Drehen durchgeführt, wofür die bereits erwähnte höhere Drehzahl erforderlich ist, muß die Kurbelwelle allein für diesen Arbeitsgang durch Anbringen entsprechender, abnehmbarer Gegengewichte sorgfältig ausgewuchtet werden. Beim Fräsen der Hubzapfen ist das Auswuchten weniger kritisch, da sich die Kurbelwelle erheblich langsamer dreht. In beiden Fällen ist für jede Hubzapfenversetzung ein erneutes, außermittiges Einspannen erforderlich. Bei dem zweiten Verfahren zum Bearbeiten der Hubzapfen dreht sich die Kurbelwelle um ihre Mittellager. Ein oder mehrere Werkzeugträger im Falle der gleichzeitigen Bearbeitung mehrerer Hubzapfen folgen dabei dem bzw. den Hubzapfen durch schwingende Bewegung mit dem gleichen Hub. Das Formdrehen der Kurbelwangen kann in gleicher Weise erfolgen. Auch bei dieser Bearbeitungsweise gilt, daß die Bearbeitung sowohl durch Drehen als auch durch Fräsen erfolgen kann, wobei die Drehzahl beim Drehen, wie bereits erwähnt, erheblich höher liegt als beim Fräsen.

Zwar treten beim Bearbeiten der Hubzapfen durch Drehen in diesem Fall keine so großen Unwuchten auf wie beim außermittigen Aufspannen, jedoch müssen hier der bzw. die Werkzeugträger dem bzw. den Hubzapfen in einer entsprechenden schwingenden Bewegung folgen, die zu erheblichen, durch den bzw. die Werkzeugträger erzeugten Massenkräften führt. Aus diesem Grunde wurden auch bereits Bearbeitungsmaschinen für Kurbelwellen mit stillstehendem Werkstück und umlaufenden Werkzeugen vorgeschlagen.

Den bekannten Bearbeitungsmaschinen ist gemeinsam, daß sich damit nur bestimmte Bearbeitungsgänge durchführen lassen, so daß bis zur Fertigbearbeitung stets mehrere, hochspezialisierte Maschinen erforderlich sind.

Die Erfindung liegt die Aufgabe zugrunde, eine Bearbeitungsmaschine für Kurbelwellen zu schaffen, mit der sich alle oder praktisch alle bis zur Fertigstellung einer Kurbelwelle erforderlichen Arbeitsgänge durchführen lassen.

Ausgehend von dieser Aufgabenstellung wird bei einem Bearbeitungszentrum für Kurbelwellen der eingangs erwähnten Art vorgeschlagen, daß erfindungsgemäß das Maschinenbett durch Zusatzbetten verlängert ist, die Universalfräseinheit NC-gesteuert und auf dem Maschinenbett sowie den Zusatzbetten verfahrbar ist und wenigstens ein auf dem Maschinenbett und dem Zusatzbett NC-gesteuert verfahrbarer Planschlitten zur auswechselbaren Aufnahme einer auf einer Palette angeordneten Fräseinheit mit einem NC-gesteuert in X- und Z-Richtung verfahrbaren Bearbeitungskopf vorhanden ist.

Mittels einer solchen NC-gesteuerten Universalfräseinheit lassen sich sowohl die Lagerzapfen als auch die Hubzapfen in einer Einspannung mit Drehung der Kurbelwelle durch die Lagerzapfenachse problemlos fertig bearbeiten, da sich die Universalfräseinheit entlang der gesamten Kurbelwelle verfahren läßt und dabei die Bearbeitung Schritt für Schritt durchführt. Bohrungen und Gewinde in den Endflanschen lassen sich mit der Universalfräseinheit ebenfalls anbringen. Auch die von den Hubzapfen zu den Lagerzapfen verlaufenden, schrägen Ölbohrungen lassen sich mit der Universalfräseinheit, die auch als Bohrmaschine einsetzbar ist, anbringen. Die Kurbelwelle braucht daher aus dem Bearbeitungszentrum allenfalls dann ausgespannt zu werden, wenn vor dem Schlichten der Lager- und Hubzapfen eine Wärmebehandlung und ein Härten der Lagerflächen erfolgt.

Wird der Werkzeugträger mit dem Bearbeitungskopf zum Bearbeiten der Hubzapfen nur in X- und Z-Richtung verfahren, ist ein Messerkopf erforderlich, der gegenüber dem Hubzapfendurchmesser einen verhältnismäßig großen Durchmesser aufweisen muß. Des weiteren ist es erforderlich, die NC-Steuerung so zu programmieren, daß die Bewegung in Z-Richtung der Tatsache Rechnung trägt, daß der Messerkopf während der Umdrehung des Hubzapfens fortlaufend unter einem anderen Winkel an dem Zapfen angreift.

Wird dem Werkzeugträger mit dem Bearbeitungskopf eine Bewegung sowohl in Y- als auch in Z-Richtung erteilt, ist die NC-Steuerung so zu programmieren, daß sich die Drehachse des Bearbeitungskopfes auf einem Kreis bewegt, dessen Durchmesser gleich dem Hub des zu bearbeitenden Hubzapfens ist. In diesem Fall muß die Bearbeitung nicht notwendigerweise mit einem Messerkopf erfolgen, dessen Drehachse parallel zur Drehachse der Kurbelwelle liegt, sondern es ist auch möglich, die Bearbeitung mit einem Stirnfräser durchzuführen.

Wird die Kurbelwelle auf einer Kurbelwellenschleifmaschine fertig bearbeitet, sind die Anforderungen an die NC-Steuerung hinsichtlich der exakten Reproduktion des Kreisquerschnitts der Hubzapfen nicht besonders hoch, da die genaue Rundheit des Hubzapfens beim Fertigbearbeiten auf der Kurbelwellenschleifmaschine erreicht wird. Es ist jedoch auch mit einer derartigen vereinfachten Programmierung der NC-Steuerung möglich, ein Fertigbearbeiten einer Kurbelwelle mittels des erfindungsgemäßen Bearbeitungszentrums zu erreichen, wenn das Schlichten der Hubzapfen mit einer außermittigen Einstellung der Kurbelwelle erfolgt, so daß sich der jeweilige, zu schlichtende Hubzapfen um seine eigene Achse dreht. In diesem Fall ergibt sich die Rundheit des Zapfens durch die Drehung um seine eigene Achse, so daß sich der Hubzapfen entweder mittels eines für eine Feinbearbeitung geeigneten Messerkopfes oder ggf. durch Austausch des Messerkopfes gegen eine Schleifscheibe fertig bearbeiten läßt.

Ausgehend von der vorgenannten Aufgabenstellung wird eine weiterbildende Lösung vorgeschlagen, die ebenfalls ein Bearbeitungszentrum für Kurbelwellen darstellt und ein Maschinenbett, wenigstens eine angetriebene, an einem Ende des Maschinenbetts angeordnete Planscheibe zum Einspannen eines Kurbelwellenendes, wenigstens einen auf dem Maschinenbett verfahrbaren Setzstock zum Unterstützen der Kurbelwelle an wenigstens einem Lager- oder Hubzapfen, wenigstens einen auf einem auf dem Maschinenbett verfahrbaren, NC-gesteuerten Planschlitten in x- und z-Richtung verfahrbaren Blockstahlhalter zum Bearbeiten der Lagerzapfen und/oder der Kurbelwangen und wenigstens eine auf einem auf dem Maschinenbett verfahrbaren Planschlitten in x- und z-Richtung verfahrbare, NC-gesteuerte Fräseinheit zum Bearbeiten der Hubzapfen und/oder der Kurbelwangen aufweist.

Aus den vorstehend erwähnten Gründen kann die Bearbeitung der Lagerzapfen und ggf. der Kurbelwangen durch Drehen mit erhöhter Drehzahl erfolgen, so daß hierfür der NC-gesteuert verfahrbare Blockstahlhalter besonders geeignet ist.

Zum Bearbeiten der Hubzapfen und/oder der Kurbelwangen läßt sich die in x- und z-Richtung NC-gesteuert verfahrbare Fräseinheit vorteilhaft einsetzen, da zum Fräsen eine niedrige Drehzahl der Kurbelwelle erforderlich ist und somit weder durch die Drehung der Kurbelwelle selbst, noch durch die schwingende Bewegung des Bearbeitungskopfes an der Fräseinheit übermäßig große Massenkräfte auftreten.

Auch in diesem Fall ist es vorteilhaft, alle Arbeitsgänge bis zum Schlichten der Zapfen mit einer Einspannung der Kurbelwelle durchzuführen, bei der sie sich um die Achse der Lagerzapfen dreht. Das Schlichten entweder mittels eines Fräskopfes oder mittels einer Schleifscheibe läßt sich wiederum bei einer Einspannung der Kurbelwelle durchführen, bei der die Kurbelwelle um die Achse des jeweiligen zu bearbeitenden Hubzapfens rotiert. Dabei kann ggf. der Messerkopf gegen eine Schleifscheibe ausgewechselt werden.

In diesem Fall läßt sich die Fräseinheit in einfacher Weise so ausführen, daß der Bearbeitungskopf um eine Achse parallel zur Kurbelwellenachse rotiert. Um zusätzlich Bohrungen in der Kurbelwelle und Gewinde herstellen zu können, kann zusätzlich zu der in x-, y- und z-Richtung NC-gesteuert verfahrbaren Fräseinheit die vorerwähnte Universalfräseinheit Teil des erfindungsgemäßen Bearbeitungszentrums der Kurbelwellen sein.

Für die Bearbeitung von langen Kurbelwellen kann eine zweite angetriebene, am anderen Ende des Maschinenbetts angeordnete und darauf verfahrbare Planscheibe zum Einspannen des anderen Kurbelwellenendes vorgesehen sein, wobei die beiden Planscheiben vorzugsweise einen elektrischen Synchronantrieb aufweisen können.

Zum Fertigbearbeiten der Hubzapfen in der vorstehend erwähnten Art mit Drehung des jeweiligen zu bearbeitenden Hubzapfens um seine eigene Achse können die Planscheiben und ggf. die Setzstöcke entsprechend dem Hubradius der Hubzapfen außermittig einstellbar sein.

Des weiteren können der Blockstahlhalter und die Fräseinheit so eingerichtet sein, daß sie sich auswechselbar auf denselben Planschlitten umsetzen lassen. Dies ist bei beengten Platsverhältnissen vorteilhaft, da sich das Maschinenbett entsprechend kürzer ausführen läßt. Ebenso kann eine komplette Schleifeinheit auswechselbar für die Universalfräseinheit vorgesehen sein oder sich auf den Planschlitten umsetzen lassen.

Um die Bearbeitung einer Kurbelwelle durch das erfindungsgemäße Bearbeitungszentrum vollständig automatisch ablaufen lassen zu können, kann das Bearbeitungszentrum wenigstens ein Werkzeugmagazin für den Blockstahlhalter und die Fräseinheiten und wenigstens einen automatischen Werkzeugwechsler aufweisen.

Die Erfindung wird nachstehend anhand eines in der Zeichnung dargestellten Ausführungsbeispiels des näheren erläutert. In der Zeichnung zeigen:

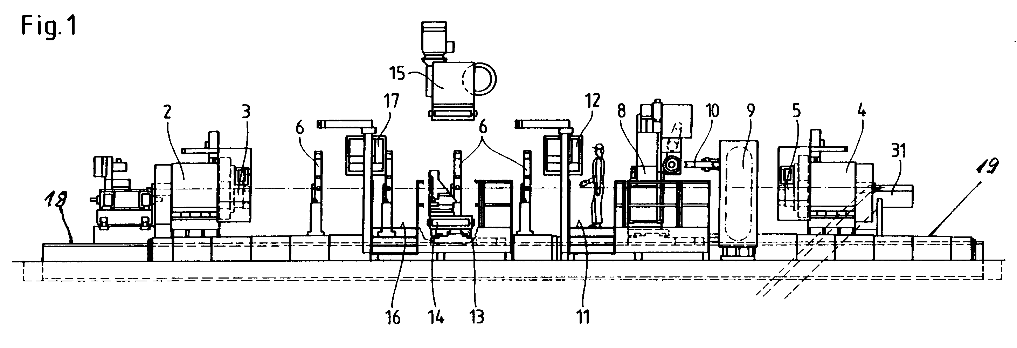

- Fig. 1: eine schematische Seitenansicht des erfindungsgemäßen Bearbeitungszentrums und
- Fig. 2: eine Draufsicht auf das erfindungsgemäßen Bearbeitungszentrum.

Das erfindungsgemäße Bearbeitungszentrum weist ein Maschinenbett 1 auf, das als Vier-Bahnen-Bett ausgebildet ist. An einem Ende des Maschinenbetts 1 ist ein Spindelkasten 2 mit einer Planscheibe 3 ortsfest angeordnet. Ein weiterer Spindelkasten 4 mit einer Planscheibe 5 ist am anderen Ende verschiebbar auf zwei Bahnen des Maschinenbetts 1 angeordnet, so daß sich unterschiedlich lange Kurbelwellen zwischen den Planscheiben 3 und 5 einspannen lassen. Auf denselben Bahnen des Maschinenbetts 1 im Bereich zwischen den Planscheiben 3, 5 sind verfahrbaren Setzstöcke 6 angeordnet, von denen im dargestellten Beispiel vier Setzstöcke 6 dargestellt sind, die zur Abstützung einer Kurbelwelle 20 mit acht Hubzapfen dienen. Ein Bearbeitungsturm 8, der als Universalfräsmaschine ausgebildet ist, ist verfahrbar auf zu den ersten beiden Bahnen ggf. parallelen Bahnen des Maschinenbetts 1 angeordnet. Mit diesem Bearbeitungsturm 8 werden im dargestellten Beispiel insbesondere die Kurbelwellenenden bearbeitet, um z. B. Bohrungen in den Endflanschen anzubringen, Gewinde zu schneiden sowie weitere erforderliche Fräsarbeiten durchzuführen. Des weiteren läßt sich der Bearbeitungsturm 8 zum Bohren der schrägen Ölbohrungen von den Hubzapfen 28 zu den Lagerzapfen 25 hin einsetzen. Die hierzu erforderlichen unterschiedlichen Werkzeuge sind in einem Werkzeugmagazin 9 angeordnet und lassen sich mittels eines Werkzeugwechslers 10 automatisch aus dem Werkzeugmagazin 9 entnehmen und in den Bearbeitungskopf des Bearbeitungsturms 8 einsetzen bzw. umgekehrt entnehmen.

Zum Bearbeitungsturm 8 gehören eine Bedienbühne 11 und eine Bedientafel 12, die sich mit dem Bearbeitungsturm 8 und dem Werkzeugmagazin 9 auf dem Maschinenbett 1 verfahren lassen.

Des weiteren ist auf den Bahnen des Maschinenbetts 1, auf denen der Bearbeitungsturm angeordnet ist, ein als Kreuzschlitten ausgebildeter Planschlitten 13 angeordnet. Zu diesem Planschlitten 13 gehört eine weitere Bedienbühne 16 mit einer Bedientafel 17.

Diese Bahnen sind beidseitig des Maschinenbetts um je ein Zusatzbett 7 verlängert, um genügend lange Verfahrwege für den Bearbeitungsturm 8 und den Planschlitten 13 zu erhalten.

Sowohl die Bedienbühne 11 für den Bearbeitungsturm 8 als auch die Bedienbühne 16 für den Planschlitten 13 sind auf einem Stützbett 18 parallel zum Maschinenbett 1 abgestützt. Der Planschlitten 13 ist zur Aufnahme einer Palette mit einem Blockstahlhalter 14 oder einer Palette mit einer Fräseinheit 15 oder einer nicht dargestellten Palette mit einer Schleifeinheit eingerichtet. Sowohl der Blockstahlhalter 14 als auch die Fräseinheit 15 sind ebenfalls NC-gesteuert.

Zum Schutz des Bereichs zwischen dem Maschinenbett 1 und dem Stützbett 18, in dem die Versorgungsleitungen für die Bearbeitungseinheiten verlaufen, sind teleskopartig zusammenschiebbare Bahnabdeckungen 19 vorgesehen.

Eine Kurbelwelle 20 ist mit ihren Endflanschen 21, 22 in die Planscheiben 3 und 5 eingespannt und durch die an den inneren Lagerzapfen 25 angeordneten Setzstöcke 6 abgestützt. Zwischen je zwei Kurbelwangen 26, 27 liegt ein Hubzapfen 28.

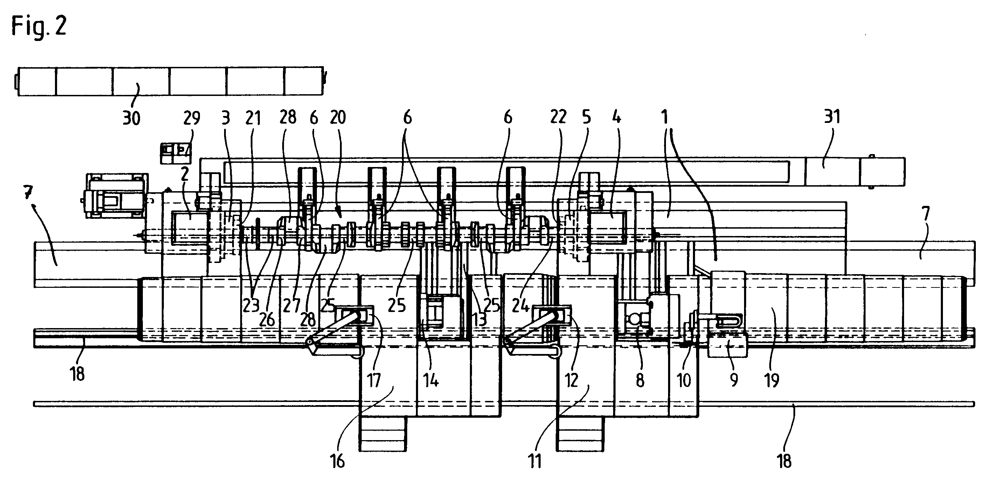

In Fig. 2 ist die Kurbelwelle 20 praktisch fertig bearbeitet dargestellt.

Die Bearbeitung beginnt damit, daß ein vorgeschmiedeter Kurbelwellenrohling an den Endflanschen und an den vier für die Setzstöcke 6 vorgesehenen Lagerzapfen 25 so mittels des Blockstahlhalters 14 vorbearbeitet wird, daß sie sich einspannen und unterstützen läßt. Hiernach werden zunächst die Lagerzapfen 23, 24 im Endbereich, die in der Regel anders gestaltet sind als die inneren Lagerzapfen 25, sowie diese inneren Lagerzapfen 25 mittels in dem Blockstahlhalter 14 eingesetzter, geeigneter Werkzeuge bearbeitet, wobei diese Bearbeitung bis einschließlich des Schlichtens erfolgen kann, wenn die Kurbelwelle keiner weiteren Wärmebehandlung unterworfen wird und die Endbearbeitung der Lagerflächen der Lagerzapfen 23, 24, 25 durch Schälen erfolgt. Der Blockstahlhalter 14 ist NC-gesteuert in x-Richtung und z-Richtung beweglich, so daß es möglich ist, auch die Kurbelwangen 26, 27 durch Drehen zu bearbeiten, wenn die Kurbelwangen einen kreisförmigen oder ovalen Querschnitt aufweisen. Für diesen Bearbeitungsgang führt der Blockstahlhalter NC-gesteuert eine schwingende Bewegung in z-Richtung durch.

Zum Bearbeiten der Hubzapfen 28 wird die Fräseinheit 15 verwendet. Der Blockstahlhalter 14 wird daher von dem Planschlitten 13 abgehoben und durch die Fräseinheit 15 ersetzt.

Die Fräseinheit 15 führt NC-gesteuert eine schwingende Bewegung in z-Richtung durch, deren Hub dem Hub des Hubzapfens 28 entspricht, jedoch so gesteuert ist, daß allein durch die Bewegung in z-Richtung der Hubzapfen 28 so bearbeitet wird, daß er die erforderliche Rundheit wenigstens angenähert erreicht. Da es sich bei diesem Bearbeitungsgang vorzugsweise um einen Schrupparbeitsgang handelt, sind die Anforderungen an die Rundheit des Hubzapfens nicht sehr hoch.

Das Schlichten der Hubzapfen erfolgt vorzugsweise in der Weise, daß die Einspannung der Endflansche 21, 22 in den Planscheiben 3, 5 außermittig verstellt wird, so daß sich die Kurbelwelle dann um die Achse des jeweiligen zu bearbeitenden Hubzapfens 28 dreht. Bei dieser Einstellung wird die Rundheit der Hubzapfen 28 durch die Drehung der Kurbelwelle um die Hubzapfenachse bestimmt, so daß für die Fräseinheit 15 nur noch eine Zustellung in z-Richtung entsprechend der Bearbeitungszugabe erforderlich ist. Das schlichten der Hubzapfenoberfläche kann durch ein geeignetes Fräswerkzeug, das eine ausreichend hohe Oberflächengüte erzeugt, bewirkt werden. Es ist auch möglich, den Fräskopf durch eine Schleifscheibe zu ersetzen, die dann mit erhöhter Drehzahl angetrieben wird und die geforderte Oberflächengüte durch Schleifen erzeugt, oder die Fräseinheit 15 durch eine entsprechende Schleifeinheit zu ersetzen.

Sämtliche Bearbeitungsgänge durch den Blockstahlhalter 14, die Fräseinheit 15 oder den Bearbeitungsturm 8 werden NC-gesteuert durchgeführt, wofür eine Steuereinheit in einem Schrank 30 angeordnet ist.

Ein Kühlmittelaggregat 29 führt den Bearbeitungswerkzeugen die erforderliche Schmier- und Kühlflüssigkeit zu, während die bei der Bearbeitung entstehenden Späne durch einen Späneförderer 31 abgeführt werden.

Benachbart zu den Blockstahlhaltern 14 und der Fräseinheit 15 kann ein weiteres, nicht dargestelltes Werkzeugmagazin mit einem Werkzeugwechsler angeordnet sein.

Die Zusatzbetten 7 und das Stützbett 18 sind so lang, daß sich sowohl der Bearbeitungsturm 8 mit dem Werkzeugmagazin 9 und dem Werkseugwechsler 10 als auch der Planschlitten 13 bis in sämtliche Bereiche der zu bearbeitenden Kurbelwelle bewegen lassen.

Zum Bearbeiten des Endflansches 22 der Kurbelwelle 20 z. B. wird der Spindelkasten 4 mit der Planscheibe 5 an das Ende des Maschinenbetts gefahren, so daß der Endflansch 22 freiliegt und mittels des Bearbeitungsturms mit Bohrungen und Gewinden versehen werden kann.

Soll der entgegengesetzte Endflansch 21 bearbeitet werden, wird die Einspannung des Endflansches 21 in der Planscheibe 3 gelöst und die Kurbelwelle 20 mit Hilfe der Setzstöcke 6 und des Spindelkastens 4, dessen Planscheibe 5 mit dem Endflansch 22 verbunden bleibt, so weit auf dem Maschinenbett 1 verfahren, daß der Endflansch 21 für den Bearbeitungsturm 8 zugänglich ist, nachdem der Planschlitten 13 auf das linke Zusatzbett 7 verfahren wurde.

Mit dem erfindungsgemäßen Bearbeitungszentrum lassen sich somit sämtliche Bearbeitungsgänge an einer Kurbelwelle durchführen, ohne die Kurbelwelle 20 ausspannen zu müssen, es sei denn, es ist vor der Endbearbeitung eine Wärmebehandlung erforderlich. Nach der Wärmebehandlung läßt sich die Kurbelwelle 20 wieder in das Bearbeitungszentrum einspannen und in der geschilderten Weise zu Ende bearbeiten.

## Patentansprüche

1. Bearbeitungszentrum für Kurbelwellen mit einem Maschinenbett (1), einer angetriebenen, an einem Ende des Maschinenbetts (1) angeordneten ersten Planscheibe (3) zum Einspannen eines Kurbelwellenendes (21), einer zweiten, angetriebenen, am anderen Ende des Maschinenbetts (1) angeordneten und darauf verfahrbaren Planscheibe (5) zum Einspannen des anderen Kurbelwellenendes (22), wenigstens einem auf dem Maschinenbett (1) verfahrbaren Setzstock (6) zum Unterstützen der Kurbelwelle (20) an wenigstens einem Lager- oder Hubzapfen (25, 28), wenigstens einer auf dem Maschinenbett (1) verfahrbaren, mit ihrem Bearbeitungskopf wenigstens in X-, Y- und Z-Richtung verfahrbaren Universalfräseinheit (8), **dadurch gekennzeichnet**, daß das Maschinenbett (1) durch Zusatzbetten (7) verlängert ist, die Universalfräseinheit (8) NC-gesteuert und auf dem Maschinenbett (1) sowie den Zusatzbetten (7) verfahrbar ist und wenigstens ein auf dem Maschinenbett (1) und dem Zusatzbett (7) NC-gesteuert verfahrbarer Planschlitten (13) zur auswechselbaren Aufnahme einer auf einer Palette angeordneten Fräseinheit (15) mit einem NC-gesteuert in X- und Z-Richtung verfahrbaren Bearbeitungskopf vorhanden ist.

2. Bearbeitungszentrum nach Anspruch 1, **gekennzeichnet durch** einen auf einer Palette angeordneten, sich mit der Fräseinheit (15) auswechseln lassenden, NC-gesteuert in X- und Z-Richtung verfahrbaren Blockstahlhalter (14).

3. Bearbeitungszentrum nach Anspruch 1 oder 2, **gekennzeichnet** **durch** eine auf einer Palette angeordneten sich mit der Fräseinheit (15) oder dem Blockstahlhalter (14) auswechseln lassende Schleifeinheit.

4. Bearbeitungszentrum nach Anspruch 3, **gekennzeichnet durch** einen elektrischen Synchronantrieb (2, 4) der beiden Planscheiben (3, 5).

5. Bearbeitungszentrum nach einem oder mehreren der Ansprüche 1 bis 4, **dadurch gekennzeichnet,** daß die Planscheiben (3, 5) und ggf. die Setzstöcke (6) entsprechend dem Hubradius der Hubzapfen (28) außermittig einstellbar sind.

6. Bearbeitungszentrum nach einem oder mehreren der Ansprüche 1 bis 5, **dadurch gekennzeichnet,** daß die auf dem Planschlitten (13) angeordnete Fräseinheit (15) und/oder die in x-, y- und z-Richtung verfahrbare Fräseinheit (8) durch Auswechseln des Messerkopfs gegen eine Schleifscheibe als Schleifeinheit zum Fertigbearbeiten der Lager- und Hubzapfen (23, 24, 25, 28) einsetzbar ist.

7. Bearbeitungszentrum nach einem oder mehreren der Ansprüche 1 bis 6, **gekennzeichnet durch** eine Steuereinheit (30) zum Steuern des Schruppens der Hubzapfen (28) durch Drehfräsen mit Einspannung der Kurbelwelle (20) in der Achse der Lagerzapfen (23, 24, 25) und des Schlichtens durch Drehfräsen oder Schleifen mit außermittiger Einspannung der Kurbelwelle (20) in der Achse des zu bearbeitenden Hubzapfens (28).

8. Bearbeitungszentrum nach einem oder mehreren der Ansprüche 1 bis 7, **gekennzeichnet durch** wenigstens ein Werkzeugmagazin (9) für den Blockstahlhalter (14) und die Fräseinheit (8, 15) und wenigstens einen automatischen Werkzeugwechsler (10).

## Claims

1. A machining centre for crankshafts with a machine bed (1), a driven first face plate (3) arranged at one end of the machine bed (1) for clamping one end (21) of a crankshaft, a second driven face plate (5) arranged at the other end of the machine bed (1) and movable thereon for clamping the other end (22) of the crankshaft, at least one steady rest (6) movable on the machine bed (1) for supporting the crankshaft (20) on at least one bearing journal or lifting journal (25, 28), at least one universal milling unit (8) movable on the machine bed (1) and movable with its machining head at least in the X, Y and Z direction, characterised in that the machine bed (1) is extended by additional beds (7), the universal milling unit (8) is numerically controlled and can be moved on the machine bed (1) and the additional beds (7) and at least one compound slide (13) movable by numerical control on the machine bed (1) and the additional bed (7) for replaceably receiving a milling unit (15) arranged on a pallet with a machining head movable by numerical control in the X and Z direction being present.

2. A machining centre according to Claim 1, characterised by a toolpost (14) movable by numerical control in the X and Z direction, arranged on a pallet and which can be substituted by the milling unit (15).

3. A machining centre according to Claim 1 or 2, characterised by a grinding unit arranged on a pallet and which can he substituted by the milling unit (15) or the toolpost (14).

4. A machining centre according to Claim 3, characterised by an electrical synchronous drive (2, 4) of the two face plates (3, 5).

5. A machining centre according to one or more of Claims 1 to 4, characterised in that the face plates (3, 5) and optionally the steady rests (6) are eccentrically adjustable corresponding to the lifting radius of the lifting journals (28).

6. A machining centre according to one or more of Claims 1 to 5, characterised in that the milling unit (15) arranged on the compound slide (13) and/or the milling unit (8) which can be moved in the X, Y or Z direction can be used as a grinding unit for finishing the bearing and lifting journals (23, 24, 25, 28) by replacing the milling head with a grinding wheel.

7. A machining centre according to one or more of Claims 1 to 6, characterised by a control unit (30) for controlling the rough-turning of the lifting journals (28) by rotary milling with clamping of the crankshaft (20) in the axis of the bearing journals (23, 24, 25) and the smoothing by rotary milling or grinding with eccentric clamping of the crankshaft (20) in the axis of the lifting journal (28) to be machined.

8. A machining centre according to one or more of Claims 1 to 7, characterised by at least one tool magazine (9) for the toolpost (14) and the milling unit (8, 15) and at least one automatic tool changer (10).

## Revendications

1. Centre d'usinage pour des vilebrequins, avec un banc-machine (1), un premier plateau circulaire (3) entraîné, disposé à une extrémité du banc-machine (1), pour enserrer une extrémité de vilebrequin (21), un deuxième plateau circulaire (5) entraîné, disposé à l'autre extrémité du banc-machine (1) est déplaçable sur celui-ci en vue d'enserrer l'autre extrémité de vilebrequin (22), au moins une lunette fixe (6), déplaçable sur le banc-machine (1), destinée à soutenir le vilebrequin (20) sur au moins un tourillon de palier de vilebrequin ou de manivelle (25, 28), au moins une unité de fraisage universel (8) déplaçable sur le banc-machine (1), déplaçable avec sa tête d'usinage au moins dans les directions X, Y et Z, caractérisé en ce que le banc-machine (1) est prolongé par des bancs additionnels (7), l'unité de fraisage universel (8) est déplaçable, sous l'action d'une commande numérique et sur le banc-machine (1) ainsi que sur les bancs additionnels (7), et au moins un chariot plan (13), déplaçable sur le banc-machine et sur le banc additionnel (7), sous l'effet d'une commande numérique, est prévu pour supporter, d'une façon permettant un échange, une unité de fraisage (15) disposée sur une palette, équipée d'une tête d'usinage soumise à une commande numérique et déplaçable dans les direction X et Z.

2. Centre d'usinage selon la revendication 1, caractérisé par un porte-outils à bloc (14), déplaçable dans les directions X et Z en étant soumis à une commande numérique, disposé sur une palette et pouvant être remplacé par l'unité de fraisage (15).

3. Centre d'usinage selon la revendication 1 ou 2, caractérisé par unité de meulage-rectification, disposée sur une palette pouvant être remplacée par l'unité de fraisage (15) ou le porte-outils à bloc (14).

4. Centre d'usinage selon la revendication 3, caractérisé par un entraînement synchrone (2 4) électrique des deux disques plan (3, 5).

5. Centre d'usinage selon l'une ou plusieurs des revendications 1 à 4, caractérisé en ce que les plateaux circulaires (3, 5) et, le cas échéant, les lunettes fixes (6) sont réglables de façon excentrée de manière correspondante au rayon de course des tourillons de manivelle (28).

6. Centre d'usinage selon l'une ou plusieurs des revendications 1 à 5, caractérisé en ce que l'unité de fraisage (15) disposée sur le chariot plan (13) et/ou l'unité de fraisage (8) déplaçable dans les directions x, y et z peuvent être mis en ouevre, par remplacement de la tête porte-lame pour un monter disque de meulage, pour constituer une unité de meulage-rectification destinée à effectuer un travail de finition sur les tourillons de palier de vilebrequin ou de manivelle (23, 24, 25, 28).

7. Centre d'usinage selon l'une ou plusieurs des revendications 1 à 6, caractérisé par une unité de commande (30), conçue pour commander le dégrossissage-ébauche des tourillons de manivelle (28), par un fraisage d'usinage cylindrique avec enserrement du vilebrequin (20) dans l'axe des tourillons de palier de vilebrequin (23 , 24, 25), et passage à la lunette par un fraisage d'usinage cylindrique ou une rectification, avec enserrement excentré du vilebrequin (20) dans l'axe du tourillon de manivelle (28) à usiner.

8. Centre d'usinage selon ou plusieurs des revendications 1 à 7, caractérisé par au moins un magasin à outils (9), destiné au porte-outils à bloc (14) et l'unité de fraisage (8, 15), et au moins un changeur d'outils (10) automatique.
